# EUROPÄISCHE PATENTSCHRIFT

(11) **EP 2 166 510 B1**
(45) Veröffentlichungstag und Bekanntmachung des Hinweises auf die Patenterteilung: **28.03.2018**
(21) Anmeldenummer: 08016457.7
(22) Anmeldetag: 18.09.2008
(51) Int. Cl.: B60R 1/00, G06T 7/73

(54) **Verfahren zum Ermitteln der Position und der Orientierung einer in einem Fahrzeug angeordneten Kamera**
Method for calculating the position and orientation of a camera in a vehicle
Procédé de détermination de la position et de l'orientation d'une caméra installée dans un véhicule

(43) Veröffentlichungstag der Anmeldung: 24.03.2010
(73) Patentinhaber: Delphi Technologies, Inc., Troy, MI 48007 (US)
(72) Erfinder: Hold, Stephanie, 42369 Wuppertal (DE); Müller-Schneiders, Stefan, 40597 Düsseldorf (DE)
(74) Vertreter: Robert, Vincent

(56) Entgegenhaltungen:
- EP-A- 1 954 063
- WO-A-97/36147
- WO-A-2007/137388
- DE-A1- 10 246 066
- US-A- 4 942 539
- US-A1- 2007 196 016
- ERNST S ET AL: "Camera calibration for lane and obstacle detection" INTELLIGENT TRANSPORTATION SYSTEMS, 1999. PROCEEDINGS. 1999 IEEE/IEEJ/ JSAI INTERNATIONAL CONFERENCE ON TOKYO, JAPAN 5-8 OCT. 1999, PISCATAWAY, NJ, USA,IEEE, US, 5. Oktober 1999 (1999-10-05), Seiten 356-361, XP010369932 ISBN: 978-0-7803-4975-9

## Beschreibung

Die vorliegende Erfindung betrifft ein Verfahren zum Ermitteln der Position und der Orientierung einer in einem Fahrzeug angeordneten Kamera.

Eine Kamera wird in einem Fahrzeug beispielsweise in Verbindung mit einem Fahrerassistenzsystem verwendet. Wenn das Fahrerassistenzsystem einen sogenannten Spurhalteassistenten umfasst, beobachtet die Kamera einen vor dem Fahrzeug liegenden Sichtbereich und ermöglicht dem Spurhalteassistenten, Fahrbahnbegrenzungen oder auch unbefestigte Straßenränder auf Nebenstrecken zu erkennen. Daher kann anhand von Bildern, die von der Kamera aufgenommen werden, ein Abstand des Fahrzeugs zum Fahrbahnrand bzw. mittels der Fahrzeuggeschwindigkeit eine Zeitdauer bis zu einem unbeabsichtigten Verlassen der Fahrbahn ermittelt werden. Sobald der Abstand zum Fahrbahnrand bzw. die Zeitdauer bis zu dem Verlassen der Fahrbahn gewisse vorbestimmte Werte unterschreiten, gibt der Spurhalteassistent eine Warnung (lane departure warning) zur Unterstützung des Fahrers aus.

Um solche Warnungen zur Unterstützung des Fahrers zuverlässig ausgeben zu können und fehlerhafte Warnungen zu vermeiden, muss die Lage und die Orientierung der Kamera bezüglich eines durch das Fahrzeug definierten Koordinatensystems möglichst genau bekannt sein, da der Abstand zum Fahrbahnrand bzw. die Zeitdauer bis zu dem Verlassen der Fahrbahn ansonsten falsch bestimmt werden.

Es sind verschiedene Verfahren vorgeschlagen worden, um die Position und die Orientierung einer in einem Fahrzeug angeordneten Kamera zu ermitteln, wobei man generell zwischen sogenannten Online- und Offline-Kalibrierverfahren unterscheidet.

Verfahren zur Online-Kalibrierung einer in einem Fahrzeug angeordneten Kamera werden während des Fahrzeugbetriebs ausgeführt und benötigen entweder geometrische Annahmen über die Umgebung des Fahrzeugs oder verwenden Parameter des Fahrzeugbetriebs, wie zum Beispiel einen Lenkwinkel oder eine Querbeschleunigung. Die geometrischen Annahmen, die meist nicht auf exakten Messungen beruhen, und die Verwendung von Parametern des Fahrzeugbetriebs, die mit Fehlern behaftet sein können, schränken die Genauigkeit von Online-Kalibrierverfahren ein, so dass eine ausschließliche Verwendung von Online-Kalibrierverfahren nicht zu der erforderlichen Genauigkeit bei der Ermittlung der Position und der Orientierung der Kamera führt.

Verfahren zur Offline-Kalibrierung werden entweder bereits während der Fertigung des Fahrzeugs oder während einer Fahrzeugwartung in Werkstätten ausgeführt. Bekannte Offline-Kalibrierverfahren verwenden horizontale und/oder vertikale geometrische Muster, die üblicherweise im Sichtbereich der Kamera vor dem Fahrzeug angeordnet werden. Bei bekannten Offline-Kalibrierverfahren muss die Lage von charakteristischen Punkten des geometrischen Musters bezogen auf ein durch das Fahrzeug definiertes Koordinatensystem genau bekannt sein. In Bildern, die von der Kamera aufgenommen werden, wird die Lage von charakteristischen Bildpunkten ermittelt, die charakteristischen Punkten des geometrischen Musters entsprechen, um mittels der Abbildungseigenschaften der Kamera und/oder eines Abbildungsmodells die Position und die Orientierung der Kamera bezogen auf das durch das Fahrzeug definierte Koordinatensystem zu ermitteln.

Zur Durchführung eines bekannten Offline-Kalibrierverfahrens ist es somit erforderlich, die drei Raumkoordinaten der charakteristischen Punkte bezogen auf das durch das Fahrzeug definierte Koordinatensystem exakt zu kennen, um die für die Kalibrierung erforderliche Genauigkeit zu erreichen. Dies ist insofern nachteilig, als die Bestimmung der drei Koordinaten der charakteristischen Punkte in dem Fahrzeugkoordinatensystem, d.h. die Vermessung der Lage der charakteristischen Punkte relativ zu dem Fahrzeug, einen erheblichen zeitlichen und apparativen Aufwand erfordert. Außerdem können die Messungen systematische Fehler enthalten und mit Ungenauigkeiten behaftet sein. Ferner müssen die drei Koordinaten der charakteristischen Punkte zumindest für jeden Fahrzeugtyp erneut bestimmt werden.

WO 2007/137388 A1 offenbart ein Verfahren zur Approximation einer Kameraposition mit Hilfe von drei vor der Kamera angeordneten Referenzmerkmalen, deren Lage im Weltkoordinatensystem bekannt ist, sodass auch die Distanzen zwischen jeweils zwei der Referenzmerkmale bekannt sind. Die Kamera nimmt ein Bild der Referenzmerkmale auf, und es werden entsprechende Projektionspunkte in der Bildebene identifiziert. Ausgehend von den Projektionspunkten werden Projektionsstrahlen durch den Brennpunkt der Kamera gezeichnet. Eine anfängliche Approximation der Position der Referenzmerkmale im Weltkoordinatensystem wird durch eine willkürliche Anordnung von drei Punkten auf den Projektionsstrahlen vor der Kamera gewonnen. Durch einen iterativen Prozess werden die Positionen der Punkte im Raum korrigiert, bis eine ausreichende Genauigkeit erreicht ist. Die Korrektur erfolgt durch Korrekturkoeffizienten, durch welche die Punkte auf ihren Projektionsstrahlen näher an den Brennpunkt heran oder weiter von diesem weg bewegt werden. Die Position der Kamera wird bestimmt, indem eine Referenzrahmentransformation durchgeführt wird.

US 4,942,539 lehrt ein Verfahren zur automatischen Bestimmung der Position und Orientierung eines Objekts anhand eines einzelnen digitalen Bildes, welches durch eine einzelne Kamera aufgenommen wurde. Dabei wird die Kamera zunächst kalibriert, um die internen geometrischen und optischen Eigenschaften der Kamera und die 3D-Position und Orientierung des Kamerarahmens relativ zu dem Koordinatensystem an einer Station zur Vermessung des Objekts zu bestimmen.

DE 102 46 066 A1 lehrt ein Verfahren zur Kalibrierung eines Bildsensorsystems in einem Kraftfahrzeug mit Hilfe eines Kalibrierobjekts, welches wenigstens drei an einer Wand angeordnete geometrische Bezugsmerkmale umfasst, deren gegenseitige räumliche Lage bekannt ist. Das Bildsensorsystem nimmt aus wenigstens zwei beliebigen Positionen mit ausreichend großer Entfernung jeweils ein Bild des Kalibrierobjektes auf. Zur Kalibrierung des Bildsensorsystems wird aus den erzeugten Bildinformationen die Ausrichtung des Bildsensorsystems bezüglich der geometrischen Fahrachse des Fahrzeugs bestimmt.

Es ist eine Aufgabe der Erfindung, ein Verfahren zu schaffen, mit dem die Position und die Orientierung einer in einem Fahrzeug angeordneten Kamera einfacher, schneller und trotzdem genau ermittelt werden kann.

Die Aufgabe wird gelöst durch ein Verfahren mit den Merkmalen des Anspruchs 1.

Ein besonderer Vorteil des erfindungsgemäßen Verfahrens ist, dass nur die Distanzen zwischen den charakteristischen Musterpunkten bekannt sein müssen, nicht aber die Lage dieser Punkte relativ zu dem Fahrzeug. Die Distanzen zwischen den charakteristischen Musterpunkten, die auf dem Boden und bevorzugt in einer Ebene angeordnet sind, können wesentlich einfacher und genauer bestimmt werden als die räumliche Lage der Punkte bezogen auf das Fahrzeug. Ferner kann das geometrische Muster beispielsweise in einer Kraftfahrzeugwerkstatt einmal auf den Boden gezeichnet und danach beliebig oft wieder verwendet werden.

Da die Distanzen zwischen den charakteristischen Punkten des geometrischen Musters nur einmal vorab gemessen werden müssen, kann das Verfahren anschließend beliebig oft ausgeführt werden, ohne dass eine erneute Messung der Distanzen zwischen den charakteristischen Musterpunkten erforderlich ist. Dadurch wird die Fehleranfälligkeit verringert und die Genauigkeit des Kalibrierens im Vergleich zu bekannten Offline-Kalibrierverfahren verbessert.

Wenn die Distanzen zwischen den charakteristischen Musterpunkten einmal bekannt sind, sind zur Ausführung des Verfahrens keine weiteren Messungen erforderlich. Hierdurch ist der Zeitaufwand zur Ausführung des Verfahrens deutlich geringer als bei bekannten Offline-Kalibrierverfahren. Anstelle des Messaufwands, der bei bekannten Offline-Kalibrierverfahren für jede Kalibrierung erforderlich ist, tritt erfindungsgemäß ein einmaliger Aufwand zur Implementierung eines Optimierungsalgorithmus für das Abbildungsmodell der Kamera.

Das Abbildungsmodell, das die Abbildungseigenschaften der Kamera beschreibt, wird dadurch optimiert, dass zunächst wenigstens drei charakteristische Bildpunkte, die charakteristischen Musterpunkten entsprechen und in der Bildebene der Kamera liegen, mittels des Abbildungsmodells in das Fahrzeugkoordinatensystem zurückprojiziert werden, d.h. mittels einer inversen Abbildung wird die Lage von zurückprojizierten Punkten im Bereich vor der Kamera berechnet. Bei den zurückprojizierten Punkten handelt es sich um virtuelle Punkte.

Die Lage der zurückprojizierten Punkte würde dann mit der Lage der charakteristischen Musterpunkte zusammenfallen, wenn das Abbildungsmodell die Abbildungseigenschaften der Kamera sowie ihre Position und Orientierung im Fahrzeug korrekt beschriebe. Dies lässt sich in der Praxis jedoch ohne eine Optimierung des Abbildungsmodells meist nicht erreichen.

Da das Abbildungsmodell von Parametern abhängt, die unter anderem die Höhe, den Rollwinkel und den Nickwinkel der Kamera bezüglich des Fahrzeugkoordinatensystems umfassen und auch als externe Parameter bezeichnet werden, können die Parameter des Abbildungsmodells zur Optimierung des Abbildungsmodells so lange variiert werden, bis die Distanz zwischen jeweils zwei der zurückprojizierten Punkte mit der bekannten Distanz zwischen den entsprechenden charakteristischen Musterpunkten in Übereinstimmung gebracht ist. Die Höhe, der Rollwinkel und der Nickwinkel der Kamera entsprechen somit zu optimierenden externen Parametern des Abbildungsmodells.

Vorteilhafte Ausbildungen der Erfindung sind den Unteransprüchen, der Beschreibung und den Zeichnungen zu entnehmen.

Um die Variation der Parameter des Abbildungsmodells auszuführen, kann eine Vielzahl von Optimierungsverfahren verwendet werden. Vorteilhafterweise erfolgt die Optimierung des Abbildungsmodells jedoch dadurch, dass eine nichtlineare Fehlerfunktion minimiert wird, welche als Fehler das Quadrat der Abweichung zwischen der Distanz jeweils zweier charakteristischer Musterpunkte und der Distanz der entsprechenden zurückprojizierten Punkte verwendet. Die Minimierung der nichtlinearen Fehlerfunktion erfolgt bevorzugt mittels eines, insbesondere deterministischen, Optimierungsalgorithmus, beispielsweise gemäß dem Nelder-Mead-Simplex-Verfahren. Vorteilhaft ist hierbei, dass der Optimierungsalgorithmus der nichtlinearen Fehlerfunktion von dem Abbildungsmodell der Kamera unabhängig ist, so dass der Optimierungsalgorithmus und das Abbildungsmodell getrennt voneinander implementiert und verbessert werden können.

Als Abbildungsmodell wird bevorzugt ein Lochkameramodell verwendet. Das Lochkameramodell ist einerseits anschaulich und weist eine geringe Anzahl von Parametern auf, ist jedoch andererseits präzise genug, um die Abbildungseigenschaften der Kamera mit der für die Kalibrierung erforderlichen Genauigkeit zu beschreiben.

Vorteilhafterweise wird die Lage der charakteristischen Bildpunkte in dem Kamerabild mittels einer modifizierten radialen Symmetrietransformation ermittelt. Die charakteristischen Bildpunkte umfassen in dem Kamerabild meistens einen Bereich von mehreren Pixeln, wenn die Auflösung der Kamera genügend groß ist. Mittels der modifizierten radialen Symmetrietransformation können beispielsweise die Zentren von kreisförmigen Punkten in dem Kamerabild mit einer Genauigkeit im Subpixelbereich bestimmt werden, so dass die Genauigkeit des Abbildungsmodells nicht durch die technischen Eigenschaften der Kamera, wie beispielsweise Pixelgröße und Auflösungsvermögen, eingeschränkt ist.

Um die Position und die Orientierung der in dem Fahrzeug angeordneten Kamera vollständig festzulegen, wird vorzugsweise zusätzlich ein Gierwinkel der Kamera bezüglich des Fahrzeugkoordinatensystems ermittelt. Dazu wird das Fahrzeug relativ zu dem geometrischen Muster geradlinig bewegt und mindestens ein zweites Bild des geometrischen Musters in einem zweiten Abstand der Kamera relativ zu dem geometrischen Muster aufgenommen, der von dem ersten Abstand verschieden ist.

Demselben charakteristischen Musterpunkt entspricht in dem ersten Kamerabild ein erster charakteristischer Bildpunkt und in dem zweiten Kamerabild ein zweiter charakteristischer Bildpunkt, und durch eine Rückprojektion in das Fahrzeugkoordinatensystem mittels des optimierten Abbildungsmodells wird die Lage eines entsprechenden ersten und zweiten zurückprojizierten Punktes berechnet. Wenn der Gierwinkel der Kamera bezogen auf die Fahrtrichtung des Fahrzeugs gleich Null ist, ändert sich die Lage des zweiten zurückprojizierten Punktes bezogen auf den ersten zurückprojizierten Punkt nicht, d.h. beide zurückprojizierte Punkte fallen zusammen. Liegt hingegen ein Gierwinkel ungleich Null vor, so wird der Gierwinkel der Kamera aus der Lageänderung des dem charakteristischen Musterpunkt entsprechenden zurückprojizierten Punktes von Bild zu Bild ermittelt. Wird das Fahrzeug entlang seiner Längsachse bewegt, so entspricht der Betrag des Gierwinkels der Kamera dem Betrag des Steigungswinkels der Lageänderung des zurückprojizierten Punktes bezogen auf die Längsachse des Fahrzeugs.

Vorteilhaft ist, dass auch für die Ermittlung des Gierwinkels der Kamera keine weiteren Messungen, beispielsweise von Abständen oder Distanzen, erforderlich sind. Insbesondere ist es nicht notwendig, den Abstand zwischen dem Fahrzeug bzw. der Kamera und den charakteristischen Musterpunkten oder die Änderung dieses Abstandes zu bestimmen.

Obwohl es für die Ermittlung des Gierwinkel grundsätzlich ausreicht, aus einem ersten Bild einen ersten zurückprojizierten Punkt und aus einem zweiten Bild einen zweiten zurückprojizierten Punkt zu berechnen, um hieraus die Lageänderung zwischen dem ersten und dem zweiten zurückprojizierten Punkt zu ermitteln, ist es vorteilhaft, zur Ermittlung des Gierwinkels der Kamera mehrere erste zurückprojizierte Punkte aus dem ersten Bild und eine entsprechende Anzahl von zweiten zurückprojizierten Punkten aus dem zweiten Bild zu berechnen, um hieraus eine entsprechende Anzahl von Lageänderungen zu ermitteln. Alternativ oder zusätzlich können mehr als zwei Bilder zur Rückprojektion der Punkte verwendet werden. Auf diese Weise wird die Genauigkeit erheblich verbessert, mit welcher der Gierwinkel der Kamera ermittelt wird, da der statistische Fehler bei der Abbildung bzw. der Rückprojektion durch eine größere Zahl von Messdaten verringert wird und Ausreißer bzw. Fehlmessungen erkannt und eliminiert werden können.

Sobald die Position und die Orientierung der in dem Fahrzeug angeordneten Kamera ermittelt worden ist, können die Höhe, der Roll-, der Nick- und der Gierwinkel der Kamera bezüglich des Fahrzeugkoordinatensystems als Parameter an einen Bildauswertungsalgorithmus eines Fahrerassistenzsystems übergeben werden. Mit anderen Worten wird der Bildauswertungsalgorithmus an die vorstehend genannten Parameter und somit an die Lage und Orientierung der Kamera angepasst. Dadurch wird die Kamera für eine spezifische Anwendung kalibriert, beispielsweise zur Verwendung in einem Spurhalteassistenten des Fahrerassistenzsystems.

Zur Durchführung des vorstehend beschriebenen Verfahrens ist eine Anordnung mit den Merkmalen des Anspruchs 11 vorgesehen. Die erfindungsgemäße Anordnung umfasst ein insbesondere ortsfestes geometrisches Muster, eine in dem Fahrzeug angeordnete Kamera sowie eine mit der Kamera verbundene Kalibriereinheit. Das geometrische Muster weist wenigstens drei nicht auf einer Geraden liegende charakteristische Musterpunkte auf, deren Distanzen bekannt sind, und ist im Sichtbereich der Kamera vor dem Fahrzeug angeordnet. Die mit der Kamera verbundene Kalibriereinheit kann als separates Modul oder als Teil einer Steuereinheit eines Fahrerassistenzsystems implementiert sein. Die Kalibriereinheit ist ferner ausgebildet, um eine Optimierung des Abbildungsmodells durchzuführen, das die Abbildungseigenschaften der Kamera beschreibt. Durch die Optimierung des Abbildungsmodells werden die Höhe, der Rollwinkel und der Nickwinkel der Kamera ermittelt, und zwar mittels der Lage von charakteristischen Bildpunkten in einem von der Kamera aufgenommenen Bild. Die Kalibriereinheit kann ferner ausgebildet sein, um den Gierwinkel der Kamera aus einer Änderung der Lage eines zurückprojizierten Punktes zu ermitteln.

Die Erfindung wird nachfolgend anhand einer vorteilhaften Ausführungsform unter Bezugnahme auf die Zeichnungen erläutert. Es zeigen:
- Fig. 1: eine schematische Darstellung einer Anordnung zur Durchführung des erfindungsgemäßen Verfahrens,
- Fig. 2: eine schematische Darstellung, welche die Ermittlung eines Gierwinkels einer Kamera veranschaulicht.

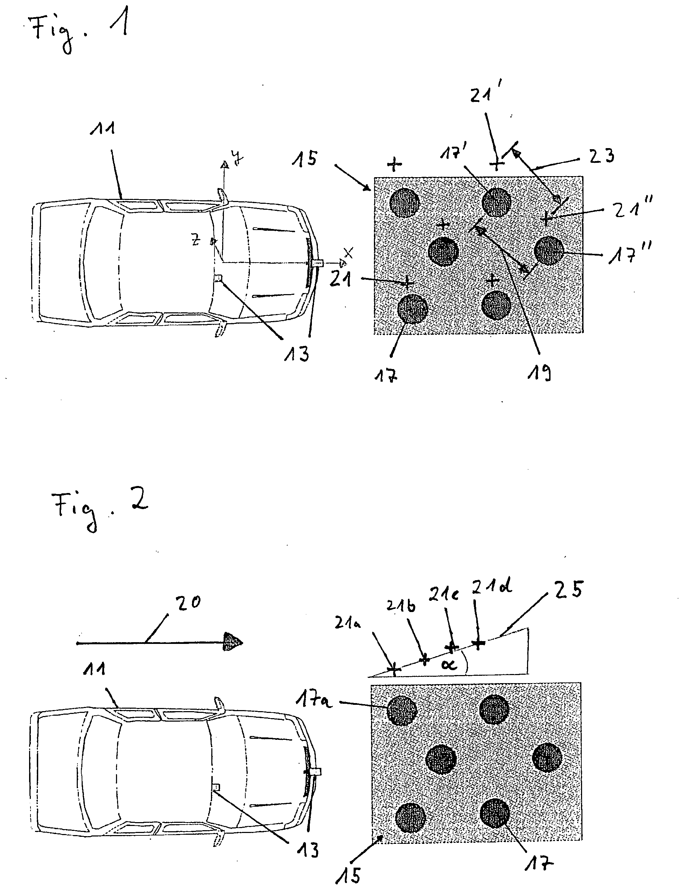

Fig. 1 zeigt ein Fahrzeug 11 und eine in diesem angeordnete Kamera 13 eines Fahrerassistenzsystems, deren Position und Orientierung, d.h. Höhe, Roll-, Nick- und Gierwinkel, bezüglich eines Fahrzeugkoordinatensystems ermittelt werden sollen. Die Kamera 13 kann beispielsweise in einem oberen Bereich der Windschutzscheibe oder in einem Frontbereich des Fahrzeugs 11 angeordnet sein.

Die x-Achse des Fahrzeugkoordinatensystems ist durch die Längsachse des Fahrzeugs 11 in Vorwärts-Fahrtrichtung definiert, die y-Achse zeigt senkrecht dazu in Richtung der Fahrertür, und die z-Achse weist senkrecht nach oben.

Die Kamera 13 besitzt eine optische Achse und einen eine Abbildungsebene definierenden Bildsensor, z.B. einen CCD-Sensor, wobei der Schnittpunkt der optischen Achse mit der Abbildungsebene als ein Bezugspunkt der Kamera verwendet wird. Der Ursprung des Fahrzeugkoordinatensystems befindet sich auf dem Boden, und die zu ermittelnde Höhe der Kamera ist durch die z-Koordinate des Bezugspunkts der Kamera in dem Fahrzeugkoordinatensystem definiert. Der zu ermittelnde Roll-, Nick- und Gierwinkel bezeichnet den Verdrehwinkel des Bildsensors um die x-Achse, die y-Achse bzw. die z-Achse des Fahrzeugkoordinatensystems.

Die Kamera 13 ist zur Ermittlung ihrer Position und Orientierung mit einer nicht dargestellten Kalibriereinheit verbunden.

Zur Ermittlung der Position und Orientierung der Kamera 13 ist ferner ein beispielsweise auf dem Boden angebrachtes geometrisches Muster 15 vorgesehen. Im vorliegenden Ausführungsbeispiel weist das geometrische Muster 15 eine Anordnung von kreisförmigen charakteristischen Musterpunkten 17 auf, wobei auch andere Ausgestaltungen des Musters möglich sind. Das geometrische Muster muss mindestens drei charakteristische Punkte 17 aufweisen, die eine Ebene vor dem Fahrzeug aufspannen. Das Muster von Fig. 1 umfasst beispielhaft sechs Punkte, um die Genauigkeit des Verfahrens zu verbessern.

Die Distanz 19 zwischen jeweils zwei charakteristischen Musterpunkten, beispielsweise zwischen den Punkten 17' und 17", ist bekannt. Zu diesem Zweck kann das Muster 15 beispielsweise nach seiner Ausbildung einmal genau vermessen werden.

Zur Ermittlung der Position und der Orientierung der Kamera 13 wird das Fahrzeug 11 vor dem Muster 15 so positioniert, dass sich das Muster 15 im Sichtbereich der Kamera 13 befindet, und es wird ein erstes Bild des geometrischen Musters 15 von der Kamera 13 aufgenommen. Das Kamerabild enthält charakteristische Bildpunkte, die den charakteristischen Musterpunkten 17 entsprechen. Die exakte Lage der charakteristischen Bildpunkte, d.h. die Zentren der Kreise oder Ellipsen, die den kreisförmigen Musterpunkten 17 entsprechen, wird vorzugsweise mittels einer modifizierten radialen Symmetrietransformation ermittelt. Dadurch kann die Lage der Bildpunkte mit einer Auflösung im Subpixelbereich bestimmt werden.

Durch die Kalibriereinheit wird mittels eines Abbildungsmodells, insbesondere eines Lochkameramodells, anschließend durch eine Rückprojektion der charakteristischen Bildpunkte die Lage von zurückprojizierten Punkten 21 berechnet. Die zurückprojizierten Punkte sind virtuelle Punkte, d.h. sie werden nicht durch eine Abbildung mittels eines optischen Systems erzeugt. Die Distanz zwischen den zurückprojizierten Punkten 21, beispielhaft dargestellt durch die Distanz 23 zwischen den Punkten 21' und 21", weicht von der Distanz 19 zwischen den charakteristischen Musterpunkten 17' und 17" ab, wenn die Position und Orientierung der Kamera 13 nicht richtig berücksichtigt werden, d.h. das Abbildungsmodell nicht optimiert ist.

Zur Optimierung des Abbildungsmodells werden die Parameter des Lochkameramodells so lange variiert, bis die Distanz 23 zwischen den zurückprojizierten Punkten 21', 21" mit der bekannten Distanz 19 zwischen den charakteristischen Musterpunkten 17', 17" in Übereinstimmung gebracht ist. Obwohl es für die Optimierung des Lochkameramodells grundsätzlich ausreicht, drei Distanzen 19 zwischen jeweils zwei charakteristischen Musterpunkten 17 zu kennen und die drei Distanzen 23 der entsprechenden zurückprojizierten Punkte 21 anzupassen, ist es vorteilhaft, weitere Distanzen 19 zwischen charakteristischen Musterpunkten 17 mit Distanzen 23 zwischen entsprechenden zurückprojizierten Punkten 21 zu vergleichen und zur Optimierung des Lochkameramodells heranzuziehen. Auf diese Weise wird die Genauigkeit der Optimierung erheblich verbessert.

Die Optimierung des Kameramodells erfolgt mittels eines deterministischen Optimierungsalgorithmus, beispielsweise eines Nelder-Mead-Simplex-Verfahrens. Der Optimierungsalgorithmus basiert auf einer Minimierung einer nichtlinearen Fehlerfunktion, welche als Fehler das Quadrat der Abweichung zwischen der Distanz 19 jeweils zweier charakteristischer Musterpunkte 17 und der Distanz 23 der entsprechenden zurückprojizierten Punkte 21 verwendet.

Die zu optimierenden Parameter des Lochkameramodells umfassen unter anderem die Höhe, den Rollwinkel und den Nickwinkel der Kamera 13 bezüglich eines durch das Fahrzeug 11 definierten Koordinatensystems. Durch die Optimierung des Modells können somit die Höhe, der Rollwinkel und der Nickwinkel der Kamera 13 ermittelt werden.

Zur zusätzlichen Ermittlung des Gierwinkels der Kamera wird das Fahrzeug 11 relativ zu dem geometrischen Muster 15 geradlinig bewegt, z.B. auf das Muster zu bewegt. Die Bewegungsrichtung ist in Fig. 2 durch einen Pfeil 20 angedeutet. Mindestens ein zweites Bild des geometrischen Musters 15 wird in einem zweiten Abstand der Kamera relativ zu dem geometrischen Muster 15 aufgenommen, wobei der zweite Abstand von dem ersten Abstand verschieden ist.

Durch eine Rückprojektion eines ersten charakteristischen Bildpunktes des ersten Kamerabildes und eines zweiten charakteristischen Bildpunktes aus dem zweiten Kamerabild, die demselben ausgewählten charakteristischen Musterpunkt 17a entsprechen, wird mittels des optimierten Abbildungsmodells die Lage eines entsprechenden ersten und zweiten zurückprojizierten Punktes 21a bzw. 21b berechnet.

Wenn der Gierwinkel der Kamera 13 ungleich Null ist, ist die Lage des zweiten zurückprojizierten Punktes 21b, der mittels des zweiten Kamerabildes berechnet wird, bezüglich des ersten zurückprojizierten Punktes 21a, der mittels des ersten Kamerabildes berechnet wird, verschoben. Dabei entspricht der Gierwinkel der Kamera 13 dem negativen Steigungswinkel α der Lageänderung der zurückprojizierten Punkte 21a, 21b bezogen auf die Bewegungsrichtung 20 des Fahrzeugs 11.

Vorteilhafterweise werden die Lagen weiterer zurückprojizierter Punkte 21c, 21d, usw. aus weiteren Kamerabildern berechnet, wobei der Abstand zwischen dem Fahrzeug 11 und dem geometrischen Muster 15 für alle Bilder verschieden ist. In diesem Fall kann der Steigungswinkel α der Lageänderung der zurückprojizierten Punkte 21a, 21b, 21c, 21d usw. mittels einer Ausgleichsgeraden 25 ermittelt werden.

Alternativ oder zusätzlich können erste und zweite zurückprojizierte Punkte 21a bzw. 21b berechnet werden, die anderen charakteristischen Musterpunkten 17 entsprechen. Auf diese Weise wird die Genauigkeit erheblich verbessert, mit welcher der Gierwinkel der Kamera ermittelt wird, da der statistische Fehler durch redundante Messdaten verringert wird und Ausreißer bzw. Fehlmessungen erkannt und eliminiert werden können.

Die ermittelte Position und Orientierung der Kamera 13, d.h. die durch die Optimierung des Kameramodells ermittelte Höhe und der ermittelte Roll-, Nick- und Gierwinkel der Kamera 13, werden anschließend von der Kalibriereinheit an eine Bildauswertungseinheit des Fahrerassistenzsystems übergeben, um einen Bildauswertungsalgorithmus der Bildauswertungseinheit an die Lage und Orientierung der Kamera 13 anzupassen und die Kamera 13 für die gewünschte Anwendung zu kalibrieren.

### Bezugszeichenliste

- 11: Fahrzeug
- 13: Kamera
- 15: geometrisches Muster
- 17, 17', 17", 17a: charakteristischer Musterpunkt
- 19: Distanz zweier charakteristischer Musterpunkte
- 20: Bewegungsrichtung des Fahrzeugs
- 21, 21', 21": zurückprojizierter Punkt
- 21a, 21b, 21c, 21d: zurückproj izierter Punkt
- 23: Distanz zweier zurückprojizierter Punkte
- 25: Ausgleichsgerade
- α: Steigungswinkel

## Patentansprüche

1. Verfahren zum Ermitteln der Position und der Orientierung einer in einem Fahrzeug (11) angeordneten Kamera (13), insbesondere zur Verwendung in einem Fahrerassistenzsystem, wobei das Verfahren umfasst, dass:
die Kamera (13) in einem ersten Abstand relativ zu einem auf dem Boden angeordneten geometrischen Muster (15) derart angeordnet wird, dass sich wenigstens drei nicht auf einer Geraden liegende charakteristische Musterpunkte (17) in einem Sichtbereich der Kamera (13) befinden, wobei die Distanzen (19) zwischen den charakteristischen Musterpunkten (17) bekannt sind;
ein erstes Bild des geometrischen Musters (15) von der Kamera (13) aufgenommen wird;
charakteristische Bildpunkte, die den charakteristischen Musterpunkten (17) entsprechen, in dem von der Kamera (13) aufgenommenen Bild ermittelt werden;
die charakteristischen Bildpunkte mittels eines die Abbildungseigenschaften der Kamera (13) beschreibenden Abbildungsmodells, das von einer Höhe, einem Rollwinkel und einem Nickwinkel der Kamera bezüglich eines durch das Fahrzeug (11) definierten Fahrzeugkoordinatensystems abhängt, virtuell zurück auf den Boden projiziert werden und die Lage der zurückprojizierten Punkte (21) in dem Fahrzeugkoordinatensystem berechnet wird;
das Abbildungsmodell optimiert wird, indem die Distanzen (23) zwischen jeweils zwei der zurückprojizierten Punkte (21) mit den bekannten Distanzen (19) zwischen den entsprechenden charakteristischen Musterpunkten (17) in Übereinstimmung gebracht werden; und
aus dem optimierten Abbildungsmodell eine optimierte Höhe, ein optimierter Rollwinkel und ein optimierter Nickwinkel der Kamera (13) bezüglich des Fahrzeugkoordinatensystems ermittelt werden.

2. Verfahren nach Anspruch 1,
**dadurch gekennzeichnet, dass**
die Optimierung des Abbildungsmodells dadurch erfolgt, dass eine nichtlineare Fehlerfunktion minimiert wird, welche als Fehler das Quadrat der Abweichung zwischen der Distanz (19) zweier charakteristischer Musterpunkte (17) und der Distanz (23) der entsprechenden zurückprojizierten Punkte (21) verwendet.

3. Verfahren nach Anspruch 2,
**dadurch gekennzeichnet, dass**
die nichtlineare Fehlerfunktion mittels eines, insbesondere deterministischen, Optimierungsalgorithmus, beispielsweise gemäß dem Nelder-Mead-Simplex-Verfahren, minimiert wird.

4. Verfahren nach zumindest einem der vorstehenden Ansprüche,
dadurchgekennzeichnet, dass
das Abbildungsmodell ein Lochkameramodell ist.

5. Verfahren nach zumindest einem der vorstehenden Ansprüche,
dadurchgekennzeichnet, dass
die Lage der charakteristischen Bildpunkte in dem Kamerabild mittels einer modifizierten radialen Symmetrietransformation ermittelt wird.

6. Verfahren nach zumindest einem der vorstehenden Ansprüche,
dadurchgekennzeichnet, dass
das Fahrzeug (11) relativ zu dem Muster (15) geradlinig bewegt wird und mindestens ein zweites Bild des geometrischen Musters (15) in einem zweiten Abstand der Kamera (13) relativ zu dem geometrischen Muster (15) aufgenommen wird, der von dem ersten Abstand verschieden ist;
durch eine Rückprojektion eines charakteristischen Bildpunktes des zweiten Bildes mittels des Abbildungsmodells die Lage eines zurückprojizierten Punktes (21b) berechnet wird;
eine Änderung der Lage des aus dem zweiten Bild resultierenden zurückprojizierten Punktes (21b) bezogen auf die Lage des entsprechenden aus dem ersten Bild resultierenden zurückprojizierten Punktes (21a) bestimmt wird; und
aus der bestimmten Lageänderung ein Gierwinkel der Kamera (13) bezüglich des durch das Fahrzeug (11) definierten Koordinatensystems ermittelt wird.

7. Verfahren nach Anspruch 6,
dadurchgekennzeichnet, dass
der Gierwinkel der Kamera (13) aus dem Steigungswinkel (α) der bestimmten Lageänderung bezogen auf die Bewegungsrichtung (20) des Fahrzeugs (11) ermittelt wird.

8. Verfahren nach einem der Ansprüche 6 oder 7,
dadurchgekennzeichnet, dass
der Gierwinkel der Kamera (13) aus der Lageänderung von mehr als einem Punkt innerhalb jedes Bildes und/oder aus mehr als zwei Bildern der Kamera ermittelt wird.

9. Verfahren zum Kalibrieren einer Kamera eines Fahrerassistenzsystems eines Kraftfahrzeugs (11), bei dem mittels eines Verfahrens nach einem der Ansprüche 6 bis 8 eine Höhe, ein Roll-, ein Nick- und ein Gierwinkel der Kamera (13) bezüglich eines durch das Fahrzeug (11) definierten Koordinatensystems ermittelt werden und ein Bildauswertungsalgorithmus des Fahrerassistenzsystems zur Auswertung von durch die Kamera (13) aufgenommenen Bildern an die ermittelte Höhe und den ermittelten Roll-, Nick und Gierwinkel der Kamera (13) angepasst wird.

10. Anordnung zum Ermitteln der Position und der Orientierung einer in einem Fahrzeug (11) angeordneten Kamera (13), insbesondere zur Verwendung in einem Fahrerassistenzsystem, wobei die Anordnung umfasst:
ein auf dem Boden angeordnetes, insbesondere ortsfestes, geometrisches Muster (15) mit wenigstens drei nicht auf einer Geraden liegenden charakteristischen Musterpunkten (17), die bekannte Distanzen (19) zueinander aufweisen;
eine in einem Fahrzeug (11) angeordnete Kamera (13), insbesondere zur Verwendung in einem Fahrerassistenzsystem, die relativ zu dem geometrischen Muster (15) derart angeordnet ist, dass sich wenigstens drei nicht auf einer Geraden liegende charakteristische Musterpunkte (17) in einem Sichtbereich der Kamera (13) befinden; und
eine mit der Kamera (13) verbundene Kalibriereinheit, die ausgebildet ist, um gemäß dem Verfahren nach einem der Ansprüche 1 bis 8 mittels einer Optimierung eines die Abbildungseigenschaften der Kamera (13) beschreibenden Abbildungsmodells, das von einer Höhe, einem Rollwinkel und einem Nickwinkel der Kamera bezüglich eines durch das Fahrzeug (11) definierten Fahrzeugkoordinatensystems abhängt, aus der Lage von charakteristischen Bildpunkten in einem von der Kamera aufgenommenen Bild, die den charakteristischen Musterpunkten (17) entsprechen, eine optimierte Höhe, einen optimierten Rollwinkel und einen optimierten Nickwinkel der Kamera (13) bezüglich des Fahrzeugkoordinatensystems zu ermitteln.

11. Anordnung nach Anspruch 10,
dadurchgekennzeichnet, dass
die Kalibriereinheit weiterhin ausgebildet ist um gemäß dem Verfahren nach einem der Ansprüche 6-8 einen Gierwinkel der Kamera (13) bezüglich des durch das Fahrzeug (11) definierten Koordinatensystems zu ermitteln.

## Claims

1. Method for determining the position and the orientation of a camera (13) arranged in a vehicle (11), in particular for use in a driver assistance system, the method comprising:
the camera (13) is arranged at a first distance relative to a geometric pattern (15) arranged on the ground such that at least three characteristic pattern points (17) not arranged on a straight line are in a field of view of the camera (13), wherein
the distances (19) between the characteristic pattern points (17) are known;
a first image of the geometric pattern (15) is taken by the camera (13);
characteristic image points corresponding to the characteristic pattern points (17) are detected in the image taken by the camera (13);
the characteristic image points are virtually projected back onto the ground by means of an imaging model describing the imaging properties of the camera (13) and being dependent of height, roll angle and pitch angle of the camera relative to a vehicle coordinate system defined by the vehicle (11), and the position of the back-projected points (21) in the vehicle coordinate system is calculated;
the imaging model is optimized by matching the distances (23) between any two of the back-projected points (21) with the known distances (19) between the corresponding characteristic pattern points (17); and
from the optimized imaging model, an optimized height, an optimized roll angle and an optimized pitch angle of the camera (13) with respect to the vehicle coordinate system are determined.

2. Method according to claim 1,
**characterized in that**
the optimization of the imaging model is carried out by minimizing a non-linear error function which uses, as error, the square of the deviation between the distance (19) of two characteristic pattern points (17) and the distance (23) of the corresponding back-projected points (21).

3. Method according to Claim 2,
**characterized in that**
the non-linear error function is minimized by means of a, in particular deterministic, optimization algorithm, for example according to the Nelder-Mead simplex method.

4. Method according to at least one of the preceding claims,
**characterized in that**
the imaging model is a pinhole camera model.

5. Method according to at least one of the preceding claims,
**characterized in that**
the position of the characteristic image points in the camera image is determined by means of a modified radial symmetry transformation.

6. Method according to at least one of the preceding claims,
**characterized in that**
the vehicle (11) is moved linearly relative to the pattern (15) and at least a second image of the geometric pattern (15) is taken at a second distance, different from the first distance, of the camera (13) relative to the geometric pattern (15);
by back-projection of a characteristic image point of the second image by means of the imaging model, the position of a back-projected point (21b) is calculated;
a change of the position of the back-projected point (21b) resulting from the second image relative to the position of the corresponding back-projected point (21a) resulting from the first image is determined; and
from the determined change in position, a yaw angle of the camera (13) relative to the coordinate system defined by the vehicle (11) is determined.

7. Method according to claim 6,
**characterized in that**
the yaw angle of the camera (13) is determined from the pitch angle (α) of the determined change in position relative to the direction of movement (20) of the vehicle (11).

8. Method according to one of claims 6 or 7,
**characterized in that**
the yaw angle of the camera (13) is determined from the change in position of more than one point within each image and/or from more than two images of the camera.

9. Method for calibrating a camera of a driver assistance system of a motor vehicle (11), in which by means of a method according to one of claims 6 to 8 a height, a roll angle, a pitch angle and a yaw angle of the camera (13) relative to a coordinate system defined by the vehicle (11) are determined and an image evaluation algorithm of the driver assistance system is adapted to the determined height and the determined roll angle, pitch angle and yaw angle of the camera (13) for evaluation of images captured by the camera (13).

10. Arrangement for determining the position and the orientation of a camera (13) arranged in a vehicle (11), in particular for use in a driver assistance system, the arrangement comprising:
a geometrical pattern (15) arranged on the ground, in particular stationary, with at least three characteristic pattern points (17) not arranged on a straight line, having known distances (19) to each other;
a camera (13) arranged in a vehicle (11), in particular for use in a driver assistance system, which is arranged relative to the geometric pattern (15) so that at least three characteristic pattern points (17) not arranged on a straight line are in a field of view of the camera (13); and
a calibration unit connected to the camera (13), which is adapted to determine according to the method of one of claims 1 to 8 by means of optimization of an imaging model describing the imaging characteristics of the camera (13), an optimized height, an optimized roll angle and optimized pitch angle of the camera (13) relative to the vehicle coordinate system from the position of characteristic image points, corresponding to the characteristic pattern points (17), in an image captured by the camera, the imaging model being dependent of height, roll angle and pitch angle of the camera relative to a vehicle coordinate system defined by the vehicle (11).

11. Arrangement according to claim 10,
**characterized in that**
the calibration unit is further adapted to determine, according to the method of one of claims 6-8, a yaw angle of the camera (13) relative to the coordinate system defined by the vehicle (11).

## Revendications

1. Procédé de détermination de la position et de l'orientation d'une caméra (13) agencée dans un véhicule (11), en particulier pour l'utilisation dans un système d'assistance au conducteur, dans lequel le procédé inclut les étapes suivantes consistant à :
agencer la caméra (13) à une première distance par rapport à un motif géométrique (15) disposé sur le sol, de telle sorte qu'au moins trois points de motif caractéristiques (17) qui ne se situent pas sur une droite se trouvent dans une zone de vision de la caméra (13), les distances (19) entre les points de motif caractéristiques (17) étant connues ;
prendre une première image du motif géométrique (15) par la caméra (13) ;
déterminer des points caractéristiques de l'image qui correspondent aux points de motif caractéristiques dans l'image prise par la caméra (13) ;
ré-projeter virtuellement sur le sol les points d'image caractéristiques au moyen d'un modèle d'imagerie qui décrit les propriétés d'imagerie de la caméra (13) et qui dépend d'une hauteur, d'un angle de roulis et d'un angle tangage de la caméra par rapport à un système de coordonnées défini par le véhicule (11), et calculer la position des points ré-projetés (21) dans le système de coordonnées de véhicule ;
optimiser le modèle d'imagerie en mettant les distances (23) entre deux points ré-projetés respectifs (21) en concordance avec les distances connues (19) entre les points de motif caractéristiques correspondants (17); et
déterminer à partir du modèle d'imagerie optimisé une hauteur optimisée, un angle de roulis optimisé et un angle de tangage optimisé de la caméra (13) par rapport au système de coordonnées de véhicule.

2. Procédé selon la revendication 1,
**caractérisé en ce que**
l'optimisation du modèle d'imagerie s'effectue par minimisation d'une fonction d'erreur non-linéaire qui utilise en tant qu'erreur le carré de l'écart entre la distance (19) de deux points de motif caractéristiques (17) et la distance (23) des points ré-projetés correspondants (21).

3. Procédé selon la revendication 2,
**caractérisé en ce que**
la fonction d'erreur non linéaire est minimisée selon un algorithme d'optimisation en particulier déterministe, par exemple selon la méthode Nelder-Mead-Simplex.

4. Procédé selon l'une au moins des revendications précédentes,
**caractérisé en ce que**
le modèle d'imagerie est un modèle de caméra à sténopé.

5. Procédé selon l'une au moins des revendications précédentes,
**caractérisé en ce que**
on détermine la position des points d'image caractéristiques dans l'image de la caméra au moyen d'une transformation de symétrie radiale modifiée.

6. Procédé selon l'une au moins des revendications précédentes,
**caractérisé en ce que**
on déplace le véhicule (11) en ligne droite par rapport au motif (15) et on prend au moins une seconde image du motif géométrique (15) à une seconde distance de la caméra (13) par rapport au motif géométrique (15), qui diffère de la première distance ;
par ré-projection d'un point d'image caractéristique de la seconde image au moyen du modèle d'imagerie, on calcule la position d'un point ré-projeté (21b);
on définit une modification de la position du point ré-projeté (21b) résultant de la seconde image par rapport à la position du point ré-projeté correspondant (21a) résultant de la première image ; et
à partir de la modification définie de la position, on détermine un angle de lacet de la caméra (13) par rapport au système de coordonnées défini par le véhicule (11).

7. Procédé selon la revendication 6,
**caractérisé en ce que**
on détermine l'angle de lacet de la caméra (13) à partir de l'angle d'inclinaison (α) de la modification définie de la position par rapport à la direction de mouvement (20) du véhicule (11).

8. Procédé selon l'une des revendications 6 ou 7,
**caractérisé en ce que**
on détermine l'angle de lacet de la caméra (13) à partir de la modification de la position de plus d'un point à l'intérieur de chaque image et/ou à partir de plus de deux images de la caméra.

9. Procédé de calibrage d'une caméra d'un système d'assistance au conducteur d'un véhicule automobile (11), dans lequel on détermine une hauteur, un angle de roulis, un angle de tangage et un angle de lacet de la caméra (13) par rapport à un système de coordonnées défini par le véhicule (11) au moyen d'un procédé selon l'une des revendications 6 à 8, et on adapte un algorithme d'évaluation d'image du système d'assistance au conducteur, destiné à évaluer les images prises par la caméra (13), à la hauteur déterminée et à l'angle déterminé de roulis, de tangage et de lacet de la caméra (13).

10. Agencement de détermination de la position et de l'orientation d'une caméra (13) agencée dans un véhicule, en particulier pour l'utilisation dans un système d'assistance au conducteur, l'agencement comprenant :
un motif géométrique (15) disposé sur le sol, en particulier stationnaire, comportant au moins trois points de motif caractéristiques (17) qui ne se situent pas sur une droite et qui présentent des distances connues (19) les uns par rapport aux autres ;
une caméra (13) agencée dans un véhicule, en particulier pour l'utilisation dans un système d'assistance au conducteur, qui est agencée par rapport au motif géométrique (15) de telle sorte qu'au moins trois points de motif caractéristiques (17) qui ne se situent pas sur une droite se trouvent dans une zone de vision de la caméra (13) ; et
une unité de calibrage connectée à la caméra (13) qui est réalisée pour déterminer, par le procédé selon l'une des revendications 1 à 8,
par optimisation d'un modèle d'imagerie qui décrit les propriétés d'imagerie de la caméra (13) et qui dépend d'une hauteur, d'un angle de roulis et d'un angle de tangage de la caméra par rapport à un système de coordonnées défini par le véhicule (11), à partir de la position des points d'image caractéristiques dans une image prise par la caméra, qui correspondent aux points de motif caractéristiques (17),
une hauteur optimisée, un angle de roulis optimisé et un angle de tangage optimisé de la caméra (13) par rapport au système de coordonnées de véhicule.

11. Agencement selon la revendication 10,
**caractérisé en ce que**
l'unité de calibrage est en outre réalisée pour déterminer, par le procédé selon l'une des revendications 6 à 8, un angle de lacet de la caméra (13) par rapport au système de coordonnées défini par le véhicule (11).
